Europäisches Patentamt

European Patent Office

Office européen des brevets

(19)

(11) EP 0 749 097 A1

(12) # DEMANDE DE BREVET EUROPEEN

(43) Date de publication:
18.12.1996 Bulletin 1996/51

(51) Int Cl.$^6$: **G06T 5/00**

(21) Numéro de dépôt: 96401259.5

(22) Date de dépôt: 11.06.1996

(84) Etats contractants désignés:
**DE FI FR GB IT NL SE**

(30) Priorité: **16.06.1995 FR 9507212**

(71) Demandeur: **ALCATEL ALSTHOM COMPAGNIE GENERALE D'ELECTRICITE**
**F-75008 Paris (FR)**

(72) Inventeurs:
• **Renouard, Frederic**
**75014 Paris (FR)**

• **Rezzouk, Jamal**
**91400 Orsay (FR)**

(74) Mandataire: **Pothet, Jean Rémy Emile Ludovic**
**ALCATEL ALSTHOM,**
**Département de Propriété Industrielle,**
**30, avenue Kléber**
**75116 Paris (FR)**

(54) **Méthode d'extraction de contours par une approche mixte contour actif et amorce/guidage**

(57)     La méthode semi-automatique d'extraction d'un contour dans une image numérique est basée sur un processus itératif de déformation (30) d'un contour actif pour obtenir un tracé courant et de prolongation (40) du tracé courant par un segment de droite. Un contour initial est entré (10) dans l'image pour servir de germe au processus itératif. Une analyse (20) de l'image numérique localement en un point du contour initial est réalisée pour déterminée une première donnée de référence. A chaque itération, cette analyse est mise en oeuvre localement en plusieurs points autour du point d'extrémité du tracé courant pour déterminer, par corrélation avec la première donnée, l'orientation du segment de prolongation du tracé courant.

FIG. 2

```
        ( DEBUT )
            │
    ┌───────────────┐
    │   ENTREE DU   │──10
    │ CONTOUR INITIAL│
    └───────────────┘
            │
    ┌───────────────┐
    │   CALCUL DU    │──20
    │   NOYAU DE     │
    │  CORRELATION   │
    └───────────────┘
            │◄──────────────┐ i
    ┌───────────────┐        │
    │  DEFORMATION   │──30    │
    │  DU CONTOUR    │        │
    │     ACTIF      │        │
    └───────────────┘        │
            │                │
    ┌───────────────┐        │
    │ •  CALCUL DES  │        │
    │ VECTEURS TANGENTS│      │
    │                │──40    │
    │ •CORRELATION DES│       │
    │ VECTEURS TANGENTS│      │
    │  AVEC LE NOYAU DE│      │
    │   CORRELATION   │       │
    └───────────────┘────────┘
            │
        ( FIN )
```

## Description

L'invention concerne une méthode semi-automatique d'extraction d'un contour d'une zone contrastée dans une image numérique stockée en mémoire d'un ordinateur, en particulier une image photographique numérisée.

L'invention s'applique notamment aux systèmes interactifs d'aide à l'extraction et à l'identification de réseaux routiers, fluviaux ou de bords de côte maritime dans une image numérique satellitaire ou aérienne.

On connaît déjà de l'article "Using Dynamic Programming for Minimizing the Energy of Active Contours in the Presence of Hard Constraints" de Amir A. Amini et al, publié par IEEE, Second Int. Conference on Computer Vision, 5 décembre 1988, TAMPA (Floride), page 95-99, une méthode d'extraction de contours basée sur un processus itératif de déformation d'un contour actif par une fonction de minimisation d'énergie. L'article "Towards Dynamic Adaptation of Snakes Contours - International Conference Image Analysis & Processing", COMO (Italie), septembre 1991 de Marie-Odile Berger, fait encore référence à une telle méthode d'extraction de contours semi-automatique.

Cette méthode connue, inclut l'entrée d'un contour initial dans l'image numérique à proximité du contour à extraire. Ce contour initial se présente sous la forme d'un tracé polygonal qui sert de germe au processus itératif. Au cours du processus itératif, le contour initial est déformé jusqu'à ce qu'il trouve une position d'équilibre correspondant à un minimum d'énergie, cette position d'équilibre définissant une partie du tracé du contour à extraire. Cette partie de tracé est ensuite prolongée par un segment de droite, l'ensemble étant de nouveau déformé et ainsi de suite pour chaque itération du processus jusqu'à ce que l'opérateur arrête ce processus. Plus particulièrement, à chaque itération du processus, une fonction prolonge le tracé courant suivant une direction de prolongation déterminée par une analyse locale de l'image numérique au point d'extrémité du tracé courant. Cette analyse locale de l'image au point courant est classiquement basée sur la détermination de la tangente au tracé au point courant d'extrémité ou encore par la détermination de la perpendiculaire au gradient au point courant d'extrémité.

La façon dont est prolongé le tracé courant ne donne pas toujours entière satisfaction. En particulier, lorsque le contour à extraire présente des variations brutales de courbure, le tracé à tendance à ne pas suivre ces variations de courbure. Il est alors nécessaire d'intervenir manuellement dans le processus de déformation ou de prolongation du contour actif pour aider le tracé à rejoindre le contour à extraire. Ces interventions sont fastidieuses si elles doivent être répétées fréquemment. C'est le cas quand le contour à extraire dans une image numérique est particulièrement complexe, par exemple quand il s'agit d'un bord de côte maritime.

Le but de l'invention est d'améliorer la méthode d'extraction de contours basée sur un processus itératif de déformation d'un contour actif. Plus particulièrement, le but de l'invention est de remédier aux inconvénients précités de la fonction connue de prolongation du tracé courant.

L'idée, à la base de l'invention, est de prévoir dans un processus itératif de déformation d'un contour actif, une fonction de prolongation du tracé courant qui tienne compte des caractéristiques de l'image non seulement au point d'extrémité du tracé courant mais aussi au voisinage du point d'extrémité du segment de prolongation du tracé courant.

Plus particulièrement, l'invention a pour objet une méthode semi-automatique d'extraction d'un contour d'une zone contrastée dans une image numérique stockée en mémoire d'un ordinateur, par un tracé sur un écran d'affichage du contour à extraire dans l'image numérique affichée sur cet écran, la méthode comprenant l'entrée d'un contour initial dans l'image numérique, un processus itératif incluant, pour chaque itération, la déformation à l'écran d'un contour actif pour obtenir un tracé courant du contour à extraire et la prolongation du tracé courant par un segment droite, ce processus étant appliqué jusqu'à l'obtention du tracé final à l'écran du contour à extraire. Selon l'invention, la méthode comprend un premier traitement réalisé à partir des pixels de l'image numérique situés dans une première fenêtre d'analyse centrée sur un point du contour initial pour déterminer une donnée de référence, dite noyau de corrélation, qui est représentative d'une configuration de l'image numérique au sein de cette première fenêtre d'analyse, et un second traitement, mis en oeuvre à chaque itération du processus itératif, ce second traitement étant réalisé à partir des pixels de l'image numérique situés dans des secondes fenêtres d'analyse réparties autour du point d'extrémité du tracé courant pour déterminer de façon analogue à la première donnée, pour chacune de ces secondes fenêtres, une seconde donnée, dite "vecteur tangent", qui est représentative d'une configuration de l'image numérique au sein de la seconde fenêtre considérée, et pour déterminer, par corrélation des secondes données avec la première donnée, l'orientation du segment de droite prolongeant le tracé courant.

D'autres caractéristiques et avantages de l'invention ressortiront encore mieux de la description qui suit d'un exemple de réalisation de l'invention.

La figure 1 montre un exemple d'image numérique dans laquelle apparaît un bord de côte maritime à extraire.

La figure 2 est un organigramme illustrant les étapes successives de la méthode selon l'invention.

La figure 3 montre l'image numérique de la figure 1 dans laquelle est entré un contour initial.

La figure 4 illustre l'étape de déformation d'un contour actif pour obtenir un tracé courant.

Les figures 5 à 7 illustrent le traitement réalisé sur une première fenêtre d'analyse des pixels de l'image pour constituer le noyau de corrélation.

Les figures 8 à 11 illustrent le traitement réalisé sur des secondes fenêtres d'analyse des pixels de l'image pour constituer les vecteurs tangents et prolonger le tracé courant.

La méthode selon l'invention sert, d'une façon générale, à extraire le contour d'infrastructures routières ou de zones naturelles dans une image numérique contenant un très grand nombre de pixels, les différents niveaux d'intensité des pixels de l'image définissant des zones contrastées. Il s'agit notamment d'une image photographique satellitaire ou aérienne qui a été numérisée.

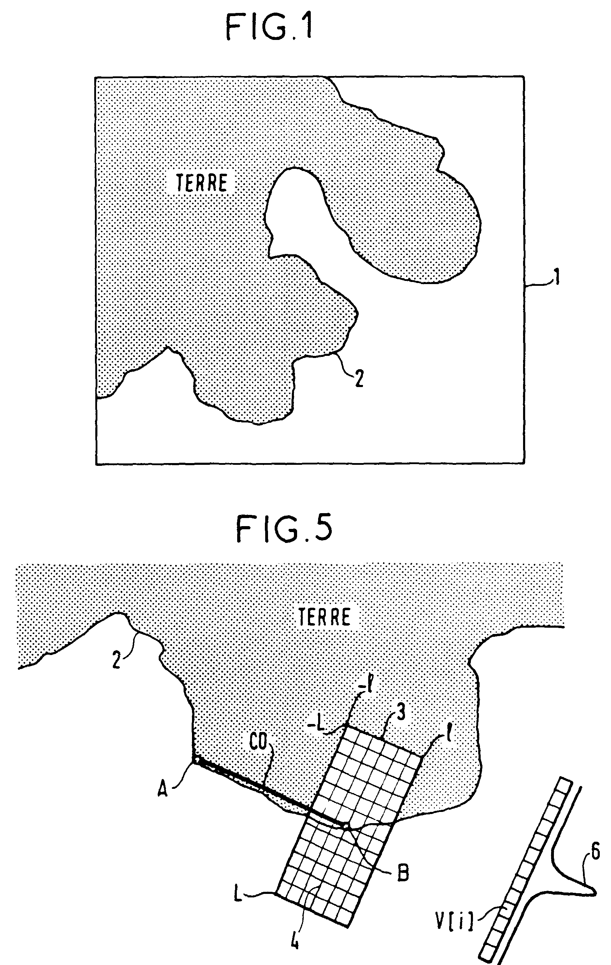

Une image photographique satellitaire numérisée est montrée sur la figure 1 à titre d'exemple. Dans cette image numérique 1, on distingue un bord de côte maritime 2 séparant la terre de la mer. La méthode selon l'invention, est adaptée à l'extraction du contour de ce bord de côte. En particulier, cette méthode est adaptée pour suivre les variations brusques de courbure de ce bord de côte.

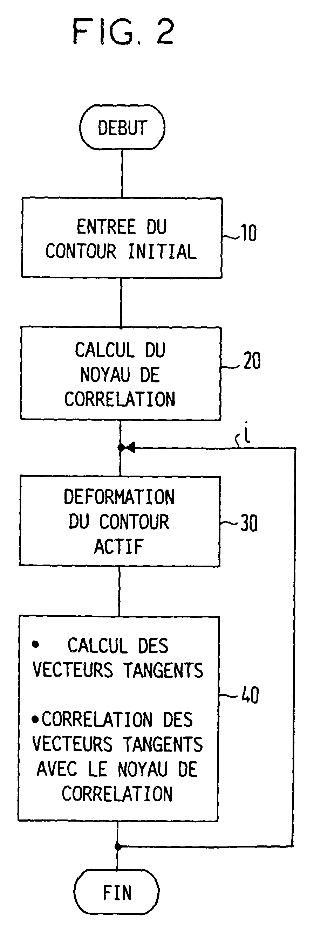

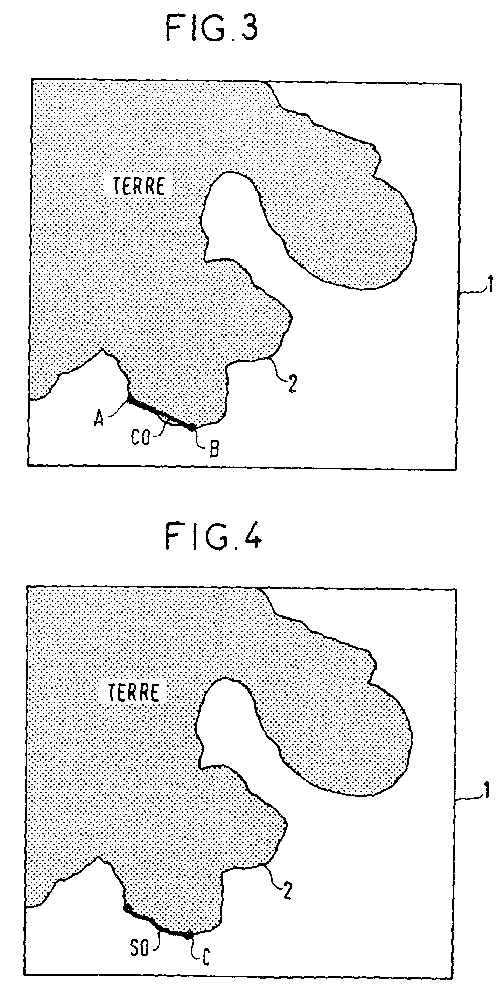

Les étapes de traitement de la méthode selon l'invention sont indiquées sur la figure 2. La méthode comprend l'entrée, en 10, d'un contour initial C0 dans l'image numérique. Ce contour initial constitue un tracé de départ se présentant ici sous la forme d'un segment de droite dont les sommets A et B (visibles figure 3) peuvent être définis à l'aide d'un organe de pointage sur écran, du type "souris" ou analogue.

La méthode d'extraction de contours selon l'invention met en oeuvre un processus de traitement itératif incluant, pour chaque itération i, la déformation à l'écran du tracé courant ou contour actif (constitué au départ par le contour initial C0) suivant un algorithme de minimisation d'énergie du contour actif et, la prolongation du tracé courant par un segment droite, ce processus itératif étant appliqué jusqu'à l'obtention du tracé final à l'écran du contour à extraire, dans le cas d'exemple le bord de côte 2.

La déformation d'un tracé courant par un algorithme de minimisation d'énergie du contour actif est un traitement connu en soi qui ne sera pas décrit ci-après. A la première itération du processus, le contour initial C0 est déformé jusqu'à ce qu'il occupe une position d'équilibre définissant un tracé courant S0 illustré figure 4. La déformation du contour actif est réalisé dans une étape 30 qui suit une étape 20 de détermination d'une donnée de référence, dite "noyau de corrélation" qui sert à la fonction de prolongation du tracé courant, dans l'étape 40 indiquée figure 2.

Plus particulièrement, dans l'étape 20, la donnée de référence est un vecteur de données V qui est déterminé à partir d'une analyse locale des pixels de l'image numérique situés autour d'un point du contour initial C0 proche du contour à extraire. Ce point du contour initial est de préférence un des sommets du segment C0 qui aura été positionné, à l'aide de l'organe de désignation, à proximité immédiate du contour à extraire, par exemple le point B.

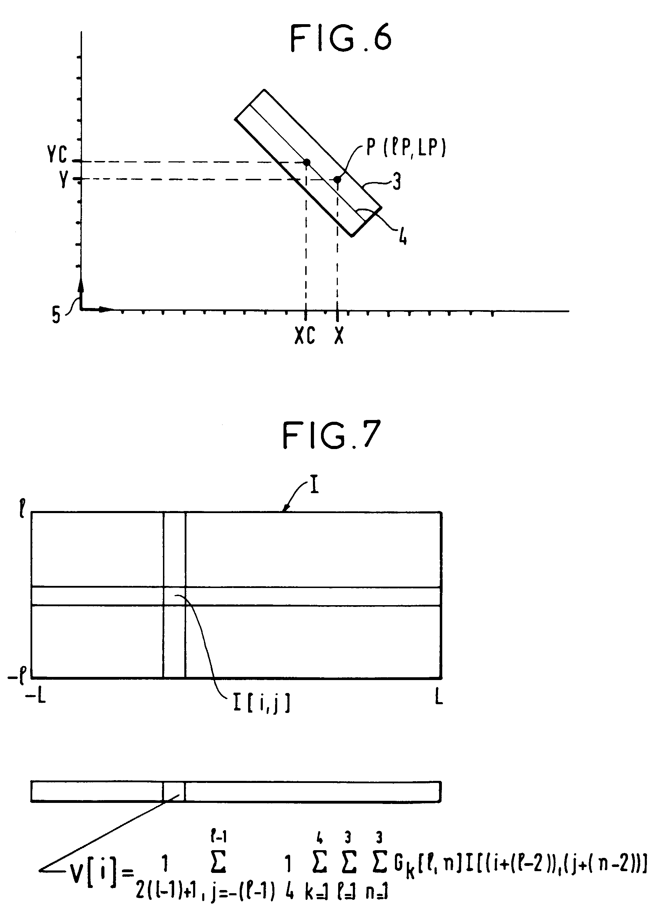

L'analyse des pixels de l'image localement au point B requiert la constitution d'une matrice de données dont les éléments sont calculés à partir des pixels de l'image numérique localisés dans une fenêtre d'analyse 3 centrée sur le point B et orientée de telle façon que sa grande médiane 4 soit perpendiculaire au segment C0 comme montré sur la figure 5.

On définit dans cette fenêtre d'analyse 3, un quadrillage formé par des lignes et des colonnes en nombre impair, l'indice des lignes allant de I à -I et l'indice des colonnes allant de L à -L. A chaque intersection du quadrillage de la fenêtre correspond un élément de la matrice I désigné par I[i,j]. Le calcul de la valeur de chaque élément I[i,j] de la matrice est réalisé de la façon suivante en relation avec la figure 6.

XC et YC sont les coordonnées du point sur lequel est centrée la fenêtre 3 dans le repère 5 de l'image numérique, le point B dans le cas présent. Xdir et Ydir sont les coordonnées, dans ce même repère, d'un vecteur normalisé de même direction que la grande médiane 4 de la fenêtre 3.

Les coordonnées (X,Y) d'un point P du quadrillage de la fenêtre 3 dont l'indice ligne est IP et dont l'indice colonne est LP, dans le repère 5, sont données par la relation suivante:

$$X = XC + 0,5 + IP.Xdir + LP.Ydir$$

$$Y = YC + 0,5 + IP.Ydir - LP.Xdir$$

On définit quatre pixels voisins du point P, P0 à P3, dont les coordonnées dans le repère 5 sont obtenues par les relations suivantes:

$$XP0 = (int(X) + int(X - int(X) + 0,5)) + 0,5$$

$$YP0 = (int(Y) + int(Y - int(Y) + 0,5)) + 0,5$$

$$XP1 = XP0 - 1$$

$$YP1 = YP0$$

$$XP2 = XP0 - 1$$

$$YP2 = YP0 - 1$$

$$XP3 = XP0$$

$$YP3 = YP0 - 1$$

où int() est la fonction partie entière.

La valeur de l'élément I[i,j] de la matrice I illustrée figure 7, correspondant au point P de coordonnées (IP, LP) dans la fenêtre 3 est égale au niveau d'intensité d'un des pixels P0 à P3 dans l'image 1 si la distance, dans le repère 5, entre le point P et ce pixel est nulle. Sinon, la valeur de l'élément I[i,j] est donnée par la relation suivante:

$$I[i,j] = \frac{\displaystyle\sum_{k=0}^{3} \frac{Int(Pk)}{dk}}{\displaystyle\sum_{k=0}^{3} \frac{1}{dk}}$$

où dk est la distance entre le point P et un point Pk (P0,P1,P2 ou P3) et Int(Pk) est la valeur de l'intensité du pixel Pk de l'image.

Les éléments du vecteur de données V sont calculés par traitement de la matrice I à l'aide d'un opérateur de calcul choisi en fonction du type d'analyse locale qui caractérise le mieux le contour à extraire dans le contexte de l'image numérique. Par exemple, l'opérateur gradient est utilisé dans le cas du bord de côte 2 où il y a une transition nette du niveau d'intensité des pixels de part et d'autre du contour à extraire.

Dans le cas d'un opérateur gradient, la valeur de chaque élément V[i] du vecteur de données V est égale à la moyenne du gradient moyen pris en chaque point de la $i^{ème}$ colonne de la matrice I, comme illustré figure 7 sur laquelle Gk (k=1,2,3,4) désigne un masque de gradient. Les 2L+1 éléments du vecteur V sont représentatifs d'une configuration du niveau de la moyenne du gradient moyen le long de la grande médiane de la fenêtre 3 qui est illustrée sur la figure 5 par la courbe 6 montrée en vis-à-vis de la fenêtre 3.

Le vecteur de données V constitue donc une donnée de référence, dite "noyau de corrélation", pour l'étape 40 de prolongation du contour actif qui suit l'étape 30 de déformation du contour actif à chaque itération i. A chaque itération i, le processus de déformation du contour actif se termine par un tracé courant dont l'extrémité est identifié par le point C sur la figure 4, appelé par la suite point d'extrémité du tracé courant.

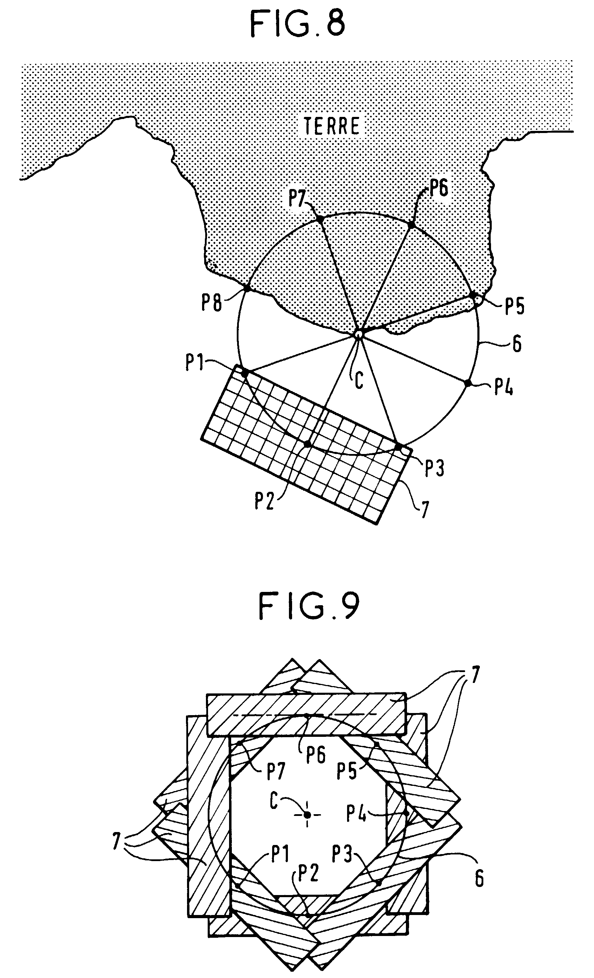

Dans l'étape 40, une analyse locale des pixels de l'image analogue à l'analyse réalisée dans l'étape 20, est mise en oeuvre sur plusieurs fenêtres d'analyse centrées sur des points respectifs, dits points projetés. Ces points projetés sont des pixels de l'image numérique 1 qui sont répartis régulièrement sur un cercle 6 centré sur le point C d'extrémité du tracé courant et ayant un rayon R défini préalablement. Le nombre de points projetés et le rayon R du cercle 6 constituent des paramètres du programme de mise en oeuvre de la méthode selon l'invention. La figure 8 montre le cercle 6 et huit points projetés P1 à P8.

Plus particulièrement, dans l'étape 40, chaque point projeté sert de centre à une fenêtre d'analyse 7 (de dimension identique à la fenêtre 3) qui est orientée perpendiculairement, suivant sa grande médiane, par rapport au rayon du cercle 6 passant par le point projeté considéré (voir figure 8 et figure 9).

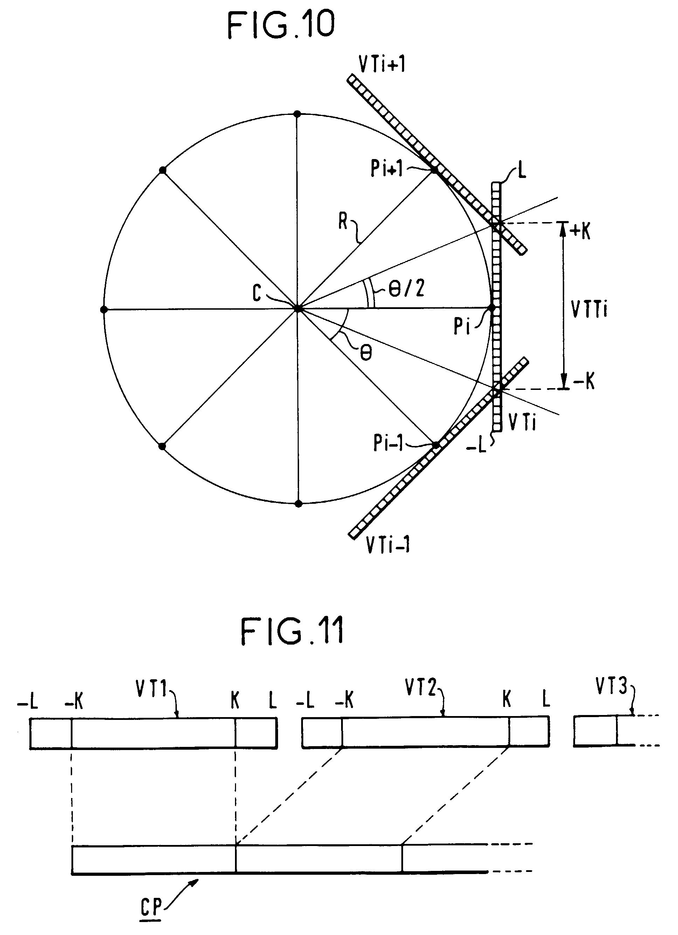

Pour chaque fenêtre d'analyse, un vecteur de données référencé VT est calculé de la même façon que le vecteur V, les vecteurs VT étant appelés par la suite "vecteurs tangents". Trois vecteurs tangents $VT_{i-1}$, $VT_i$, $VT_{i+1}$ sont illustrés à la figure 10 en vis-à-vis de trois points projetés correspondants indiqués $P_{i-1}, P_i, P_{i+1}$, chaque vecteur tangent VT comprenant 2L+1 éléments qui sont représentatifs de la configuration du niveau de la moyenne du gradient moyen le long de la grande médiane de la fenêtre 7 qui correspondant au vecteur tangent considéré.

L'orientation du segment prolongeant le tracé courant est donnée par la position d'un pixel de l'image numérique à rechercher et correspondant à un élément particulier d'un des vecteurs tangents qui représente un maximum de corrélation entre les vecteurs tangents VT et le vecteur V. Cet élément particulier est déterminé de la façon suivante.

Les éléments de chaque vecteur tangent VT dont l'indice est compris entre K et -K (K étant la partie entière du produit $R.tg(\theta/2)$ sont concaténés dans un vecteur CP comme illustré à la figure 11, le vecteur CP comprenant N(2K+1) éléments.

Un vecteur de données CPcorr comprenant N (2K+1) éléments est constitué par corrélation entre le vecteur V et le vecteur CP suivant la relation:

$$CPcorr[j] = \sum_{i=L}^{i=+L} V[i]CP[j \oplus i]$$

où $\oplus$ est un opérateur défini sur les entiers valant le reste de la division entière de (i+j+N(2K+1)) par N (2K+1).

L'élément ayant la valeur maximale dans le vecteur CPcorr est l'élément particulier qui représente le maximum de corrélation. La position de cet élément particulier dans l'un des vecteurs tangent VT sert à identifier les coordonnées d'un point correspondant situé sur la grande médiane d'une des fenêtres d'analyse 7. Les coordonnées de ce point dans la fenêtre d'analyse identifiée précédemment servent à identifier le pixel correspondant dans l'image numérique 1. Ce pixel est le pixel d'extrémité recherché du segment de prolongation du tracé. Il détermine par conséquent l'orientation du segment de prolongation par rapport au point d'extrémité du tracé courant.

A chaque itération, l'orientation du segment de prolongation est donc déterminée comme indiqué ci-dessus et à l'itération suivante, le contour actif s'allonge du segment de prolongation déterminé à l'itération précédente.

La fonction de prolongation de cette méthode d'extraction de contours est basée sur une approche amorce/guidage, l'amorce étant constituée par le contour initial et le guidage du tracé, au moment de la prolongation, étant réalisé à l'aide d'une analyse de similitude de l'image au voisinage d'un point de l'amorce et au voisinage du point d'extrémité du tracé courant.

**Revendications**

1.  Une méthode semi-automatique d'extraction d'un contour (2) d'une zone contrastée dans une image numérique (1) stockée en mémoire d'un ordinateur, par un tracé sur un écran d'affichage du contour à extraire dans l'image numérique affichée sur cet écran, la méthode comprenant l'entrée (10) d'un contour initial (C0) dans l'image numérique, un processus itératif incluant, pour chaque itération, la déformation (30) à l'écran d'un contour actif pour obtenir un tracé courant du contour à extraire et la prolongation (40) du tracé courant par un segment droite, ce processus étant appliqué jusqu'à l'obtention du tracé final à l'écran du contour à extraire, caractérisée en ce qu'elle comprend un premier traitement (20) réalisé à partir des pixels de l'image numérique situés dans une première fenêtre d'analyse centrée sur un point du contour initial pour déterminer une donnée de référence, dite noyau de corrélation, qui est représentative d'une configuration de l'image numérique au sein de cette première fenêtre d'analyse, et un second traitement, mis en oeuvre à chaque itération du processus itératif, ce second traitement étant réalisé à partir des pixels de l'image numérique situés dans des secondes fenêtres d'analyse réparties autour du point d'extrémité du tracé courant pour déterminer de façon analogue à la première donnée, pour chacune de ces secondes fenêtres, une seconde donnée, dite "vecteur tangent", qui est représentative d'une configuration de l'image numérique au sein de la seconde fenêtre considérée, et pour déterminer, par corrélation des secondes données avec la première donnée, l'orientation du segment de droite prolongeant le tracé courant.

# FIG.1

TERRE

1

2

# FIG.5

TERRE

2

-ℓ

-L

3

CO

ℓ

A

B

L

4

V[i]

6

# FIG. 2

```
        ┌─────────┐
        │  DEBUT  │
        └────┬────┘
             │
    ┌────────┴────────┐
    │    ENTREE DU    │  ~10
    │ CONTOUR INITIAL │
    └────────┬────────┘
             │
    ┌────────┴────────┐
    │   CALCUL DU     │  ~20
    │    NOYAU DE     │
    │  CORRELATION    │
    └────────┬────────┘
             │                    ⟨i
             ●◄───────────────────────┐
    ┌────────┴────────┐               │
    │   DEFORMATION   │  ~30          │
    │   DU CONTOUR    │               │
    │     ACTIF       │               │
    └────────┬────────┘               │
             │                        │
    ┌────────┴────────┐               │
    │  •   CALCUL DES │               │
    │ VECTEURS TANGENTS│              │
    │                 │  ~40          │
    │ •CORRELATION DES│               │
    │ VECTEURS TANGENTS│              │
    │ AVEC LE NOYAU DE│               │
    │   CORRELATION   │               │
    └────────┬────────┘               │
             ●────────────────────────┘
        ┌────┴────┐
        │   FIN   │
        └─────────┘
```

# FIG.3

# FIG.4

# FIG.6

YC
Y

P (ℓP, LP)

3

4

5

XC  X

# FIG.7

ℓ

I

-ℓ
-L

I [ i, j ]

L

$$v[i] = \frac{1}{2(\ell-1)+1} \sum_{j=-(\ell-1)}^{\ell-1} \frac{1}{4} \sum_{k=1}^{4} \sum_{\ell=1}^{3} \sum_{n=1}^{3} G_k[\ell, n] I[(i+(\ell-2)), (j+(n-2))]$$

9

# FIG.8

# FIG.9

# FIG.10

# FIG.11

Office européen
des brevets

**RAPPORT DE RECHERCHE EUROPEENNE**

Numero de la demande

EP 96 40 1259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS OF THE 12TH IAPR INTERNATIONAL CONFERENCE ON PATTERN RECOGNITION, vol. 1, 9 - 13 Octobre 1994, JERUSALEM, ISRAEL, pages 68-73, XP002014208 HENRICSSON O & NEUENSCHWANDER W: "Controlling Growing Snakes by Using Key-Points." * page 70, alinéa 4.2 * --- | 1 | G06T5/00 |
| A | COMPUTER VISION - ECCV 90. FIRST EUROPEAN CONFERENCE ON COMPUTER VISION PROCEEDINGS, 23 - 27 Avril 1990, ANTIBES, FRANCE, pages 570-572, XP002014209 BERGER M O: "Snake Growing" * page 570, alinéa 2 * --- | 1 | |
| A | EP-A-0 633 548 (PHILIPS ELECTRONICS N.V.) * abrégé * * colonne 3, ligne 11 - ligne 38 * * colonne 6, ligne 49 - colonne 7, ligne 49 * ----- | 1 | |

DOMAINES TECHNIQUES RECHERCHES (Int.Cl.6)

G06T

Le présent rapport a été établi pour toutes les revendications

| Lieu de la recherche | Date d'achèvement de la recherche | Examinateur |
|---|---|---|
| LA HAYE | 25 Septembre 1996 | Gonzalez Ordonez, O |